# EUROPÄISCHE PATENTANMELDUNG

(11) **EP 1 128 294 A1**
(43) Veröffentlichungstag der Anmeldung: **29.08.2001**
(21) Anmeldenummer: 00103415.6
(22) Anmeldetag: 25.02.2000
(51) Int. Cl.: G06F 17/60, G06F 17/40

(54) **Verfahren zur automatisierten Nachführung von Grenzwerten**

(71) Anmelder: Fernholz, Frank, 59394 Nordkirchen / Südkirchen (DE)
(72) Erfinder: Fernholz, Frank, 59394 Nordkirchen / Südkirchen (DE)
(74) Vertreter: Stenger, Watzke & Ring Patentanwälte

(57) **Zusammenfassung**

Der vorliegenden Erfindung liegt die Aufgabe zugrunde, ein Verfahren zur automatisierten Nachführung von Grenzwerten bereitzustellen, welches es ermöglicht, auf eine dauerhafte persönliche Überwachung zu verzichten und dennoch eine wunschgemäße Absicherung vor Führungsparameterveränderungen zu gewährleisten. Zur technischen Lösung wird mit der Erfindung vorgeschlagen ein Verfahren zur automatisierten Nachführung wenigstens eines Grenzwertes für die Durchführung von grenzwertbezogenen Folgemaßnahmen bei einer entsprechenden Veränderung wenigstens eines überwachten und mit dem Grenzwert verglichenen Führungsparameters, wobei
a) ein erster Grenzwert festgelegt,
b) wenigstens ein zweiter Grenzwert festgelegt und diesem ein Ersatzwert zugeordnet wird,
c) der Führungsparameter überwacht und mit dem ersten und zweiten Grenzwert verglichen wird,
d) festgelegte Folgemaßnahmen eingeleitet werden, wenn der überwachte Führungsparameter den ersten Grenzwert erreicht oder
e) der erste festgelegte Grenzwert eliminiert und durch den Ersatzwert ein neuer erster Grenzwert festgelegt wird, wenn der Führungsparameter mit dem zweiten Grenzwert übereinstimmt.

## Beschreibung

Die vorliegende Erfindung betrifft ein Verfahren zur automatisierten Nachführung wenigstens eines Grenzwertes für die Durchführung von grenzwertbezogenen Folgemaßnahmen bei einer entsprechenden Veränderung wenigstens eines überwachten und mit dem Grenzwert verglichenen Führungsparameters.

Im Bereich vieler Anwendungsfälle ist es bekannt, Folgemaßnahmen von der jeweiligen Veränderung eines Führungsparameters abhängig zu machen. Der Führungsparameter wird überwacht und bei Erreichen eines vorgegebenen Wertes, Grenzwert genannt, wird eine Maßnahme eingeleitet. Bei einer großen Zahl von Anwendungsfällen, bei denen die Folgemaßnahmen nicht einfach über Aktoren realisierbar sind, ist es erforderlich, daß die Überwachung des Führungsparameters durch Personen erfolgt.

Unabhängig davon jedoch gibt es viele Anwendungsfälle, bei denen zwar ein Grenzwert festgelegt wird, die tatsächliche Änderung des Führungsparameters jedoch auch eine Verschiebung des Grenzwertes zweckmäßig erscheinen läßt.

Ein beispielhafter Anwendungsfall ist im Bereich des Börsenhandels gegeben, wo es bekannt ist, Wertpapiere zu einem Einstiegskurs zu erwerben und ein unteres Limit festzulegen, bei dessen Erreichen durch den tatsächlichen Wert des Wertpapiers dieses verkauft wird. Dabei handelt es sich um Sicherungsmaßnahmen, um mögliche Verluste zu minimieren. Derartige Führungsparameterüberwachungen, beispielsweise Aktienkurse oder dergleichen, finden praktisch automatisch statt und bei Erreichen des gesetzten Limits wird eine Verkaufsorder automatisch rausgegeben. Nun kann es jedoch sein, daß sich der entsprechende Titel positiv entwickelt und somit die Grenzwertregel nicht mehr sinnvoll ist, da der Besitzer den Verlust des gesamten sich ergebenden Gewinns hinnehmen muß, bis die Verkaufsorder gesetzt wird. In diesem Fall ist es sinnvoll, den Grenzwert nachzuführen, wofür es jedoch keine automatisierten Verfahren gibt.

Vergleichbare Anwendungsfälle auch im Bereich der Technik zu Durchführung von Maßnahmen im Klimabereich, Nachkühlung, Erwärmung, Lichtsteuerung, Haustechnik und dergleichen basieren auf denselben Prinzipien.

Ausgehend vom vorbeschriebenen Stand der Technik liegt der vorliegenden Erfindung die **Aufgabe** zugrunde, ein Verfahren zur automatisierten Nachführung von Grenzwerten bereitzustellen, welches es ermöglicht, auf eine dauerhafte persönliche Überwachung zu verzichten und dennoch eine wunschgemäße Absicherung vor Führungsparameterveränderungen zu gewährleisten.

Zur technischen **Lösung** wird mit der Erfindung vorgeschlagen ein Verfahren zur automatisierten Nachführung wenigstens eines Grenzwertes für die Durchführung von grenzwertbezogenen Folgemaßnahmen bei einer entsprechenden Veränderung wenigstens eines überwachten und mit dem Grenzwert verglichenen Führungsparameters, wobei
a) ein erster Grenzwert festgelegt,
b) wenigstens ein zweiter Grenzwert festgelegt und diesem ein Ersatzwert zugeordnet wird,
c) der Führungsparameter überwacht und mit dem ersten und zweiten Grenzwert verglichen wird,
d) festgelegte Folgemaßnahmen eingeleitet werden, wenn der überwachte Führungsparameter den ersten Grenzwert erreicht oder
e) der erste festgelegte Grenzwert eliminiert und durch den Ersatzwert ein neuer erster Grenzwert festgelegt wird, wenn der Führungsparameter mit dem zweiten Grenzwert übereinstimmt.

Mit der Erfindung wird vorgeschlagen, daß zu Beginn der Überwachung eines Führungsparameters ein erster Grenzwert festgelegt, beispielsweise unter Nutzung einer die Überwachung durchführenden DV-Anlage gespeichert wird und wenigstens ein zweiter Grenzwert festgelegt wird, dem ein Ersatzwert zugeordnet ist. Dieses Paar aus zweiter Grenzwert und Ersatzwert wird ebenfalls gespeichert oder sonstwie hinterlegt. Ergibt nun die Überwachung des Führungsparameters, daß diese den ersten Grenzwert erreicht, so entspricht dies dem üblichen Eintreten eines Kriteriums zur Einleitung einer festgelegten Folgemaßnahme, beispielsweise einem Verkauf oder einem Kauf eines Handelsgutes, einem Verändern physikalischer Größe wie Erwärmen, Kühlen oder dergleichen. Verändert sich jedoch der Führungsparameter derart, daß er sich dem zweiten Grenzwert entsprechend entwickelt, so wird der erste Grenzwert gelöscht und ein neuer erster Grenzwert in Form des dem zweiten Grenzwert zugeordneten Ersatzwert festgelegt. Zugleich kann die Paarung aus zweitem Grenzwert und Ersatzwert gelöscht werden, so daß, sofern eine entsprechende Tabelle hinterlegt ist, ein neuer zweiter Grenzwert und ein neuer Ersatzwert für die folgende Überwachung gültig sind. Auf diese Weise ist es möglich, einen ersten Grenzwert ständig einer Entwicklung eines Führungsparameters anzupassen, indem auf tabellenartig hinterlegte Paarungen zweiter Grenzwerte und Ersatzwerte zurückgegriffen wird.

In vorteilhafter Weise können die Führungsparameter DV-unterstützt überwacht werden, beispielsweise aufgrund einer Online-Einspeisung, Datenfernübertragung oder sonstwie, vorzugsweise in Echtzeit. Die Durchführung eines Vergleiches zwischen Führungsparameter und hinterlegten Grenzwerten kann ebenfalls softwaregesteuert erfolgen ebenso wie das Einleiten von Folgemaßnahmen oder Maßnahmen zum Ersetzen der Grenzwerte.

Das Verfahren kann auf obere und/oder untere Grenzwerte angewandt werden und es können eine Vielzahl von verschiedenen Grenzwerten, die jeweils unterschiedliche Folgemaßnahmen repräsentieren, in entsprechender Weise nachführbar ausgelegt werden.

Mit der Erfindung wird darüber hinaus vorgeschlagen, die Überwachung und Grenzwertnachführung innerhalb eines vorgegebenen Zeitintervalls durchzuführen.

Ebenso im Rahmen der Erfindung liegt die Festlegung von relativen (prozentual oder fester Abstand) Veränderungen anstelle von Ersatzwerten. Wird beispielsweise dem zweiten Grenzwert die Vorschrift zugeordnet, daß der erste Grenzwert um 10% angehoben wird, so wird bei Erreichen des zweiten Grenzwertes durch den Führungsparameter der erste hinterlegte Grenzwert mit dem Faktor 1,1 multipliziert und auf diese Weise neu festgelegt.

Das erfindungsgemäße Verfahren stellt eine einfache Maßnahme zur Nachführung von Grenzwerten dar, welche auf unterschiedlichste Verfahrensarten angewandt werden kann.

Ein Einsatzgebiet für die Anwendung der Erfindung ist beispielsweise ein Börsen-Handels-Vorgang.

Eine Step - in Order ist z. B. eine Weisung, die theoretisch zur Erteilung eines Auftrages (Kauf oder Verkauf einer Ware, eines Terminkontraktes, von Devisen, Wertpapieren etc.) an jedem beliebigen Markt gegeben werden kann. Da jedoch die Erfüllung dieser Order nur in transparenten Märkten nachvollziehbar und ordnungsgemäß erfolgen kann, ist diese Order sinnvoller Weise vor allem für Börsen, und speziell (wegen der großen Zahl von Kombinationsmöglichkeiten dieser Order mit anderen Weisungen) für elektronischen Börsenplattformen geeignet. Grundsätzlich bedeutet die Angabe des Order - Zusatzes Step - in, daß eine Order erst dann in ein Orderbuch aufgenommen wird, wenn das Limit, das bzgl. des Step - ins gegeben wurde, erreicht wird. Um die abstrakte Erläuterung der Step - in Order zu vereinfachen, werden hier zwei Arten von Step - in Orders unterschieden: die "lower step - in Order" (LSI) und die "higher step - in Order" (HSI).
LSI bedeutet, daß das Step - in Level unter dem aktuellem Kursniveau für das Produkt (Ware, Wertpapier, Kontrakt, etc.) plaziert wird.
HSI bedeutet, daß das Step - in Limit über dem aktuellem Kursniveau gesetzt wird.

Diese Unterscheidung in LSI und HSI ist nicht notwendig, da bei Ordererteilung der aktuelle Marktpreis und das Limit bekannt sind (sie erleichtert - wie gesagt - nur die Erläuterung). Das Erreichen des Step - in Limits macht noch keine Aussage über die Ausführung der Order, da diese Order beim Erreichen des Step - in Limits lediglich ins Orderbuch gestellt wird. Ob und wie die Order ausgeführt wird, hängt von den zusätzlichen Orderspezifikationen ab. Ein "Erreichen des Step - in Limits" kann auf drei Weisen interpretiert werden:
Erstens kann festgelegt werden, daß "Erreichen des Step - in Limits" bedeutet, daß zu diesem Kurs oder zu einem höherem Kurs (HSI) bzw. niedrigerem Kurs (LSI) eine Ausführung (ein Umsatz) erfolgte.
Zweitens kann alternativ festgelegt werden, daß das "Erreichen des Step - in Limits" auch schon dann vorliegt, wenn der Geldkurs das Step - in Limit erreicht oder unter diesem liegt (LSI) bzw. wenn der Briefkurs das Step - in Limit erreicht oder über diesem liegt (HSI).
Drittens kann alternativ schließlich festgelegt werden, daß das "Step ― in Limit als Erreicht" gilt, wenn die entsprechende Seite des Geld - Briefkurses (also: Geldkurs, wenn der Erteiler der Order verkaufen will und Briefkurs, wenn der Erteiler der Order kaufen will) das Step - in limit berührt oder übersteigt (HSI) bzw. unter dieses fällt (LSI).

Wie jede Order braucht auch die Step - in Order Standartangaben wie:
das Handelsgut (Wertpapier, Ware, Kontrakt, etc.)
die Menge, die gehandelt werden soll
eine Angabe über den Preis (market, Limit)
Gültigkeit der Order (tagesgültig, bis Datum, etc.)
Weitere Angaben für Abwicklungszwecke (Name des Auftraggebers, etc.)

All diese Angaben sind für eine Order, die mit dem Zusatz Step - in versehen werden ebenfalls zwingend erforderlich. Allerdings müssen zu diesen Angaben weitere Weisungen gegeben werden.

Denkbare Step - in Orders sind:

### 1) Step - in market (bestens/billigst) order:

Diese Order führt dazu das beim Erreichen des Step - in Limits die Order zum nächst besten Kurs ausgeführt wird. Zur Vereinfachung wird hier davon ausgegangen, daß die entsprechende Menge, die gekauft bzw. verkauft werden soll auch auf dem nächst besten Geld - oder Briefkurs zur Verfügung steht; es sei aber darauf hingewiesen, daß Teilausführungen und Ausführungen zu mehreren Kursen möglich sind.

Dies wird anhand von Beispielen erläutert:

### a) Kauf 100 ABC ― Aktien market, higher step ― in (HSI) 105

*Diese Order wird bei Erreichen (von unten) des HSI Limits zum nächst besten Brief - Kurs(en) ausgeführt*. *Der Ausführungspreis kann sowohl über,* als auch *unter 105 liegen.*

### b) Verkauf 50 XYZ ― Kontrakte market, LSI 115,80

*Diese Order wird zum nächst besten Geld - Kurs ausgeführt*, *sobald das Step* ― *in limit erreicht wurde.*

### c) Kauf 50 Metall UVW ― Future März market, LSI 23,60

*Diese Order wird bei Erreichen des HSI Limits zum nächst besten Brief-Kurs ausgeführt.*

### d) Verkauf Anleihe DEF market, HSI 102,23

*Diese Order wird zum nächst besten Geld - Kurs ausgeführt, sobald das Step - in limit erreicht wurde.*

*Die Beispiele a und c sowie b und d sind prinzipiell gleich, da unter Berücksichtigung des aktuellen Marktpreises bei Ordererteilung eine Unterscheidung in LSI und HSI nicht notwendig ist (s.o.).*

### 2) Step ― in stop order

Die Verwendung einer Step - in stop order führt dazu, daß beim Erreichen des Step - in Limits eine Stop - Order in das Handelssystem eingestellt wird. Erreicht der Markt dieses Stop - Limit, nachdem es in das Orderbuch eingestellt wurde, weil das Step - in Limit zuvor erreicht wurde, wird die Order zum nächst besten Kurs ausgeführt. Sollte das Stop - Limit erreicht werden, bevor das Step - in limit erreicht wurde, wird es zu keiner Ausführung kommen, da auch noch keine Order in das Orderbuch eingestellt wurde.

Dies wird anhand von Beispielen erläutert:

### a) Kauf 5 Mio. Währung ABC on stop 1,0329, Step - in 1,0301

*Diese Order wird ausgeführt, sobald das Step* ― *in Level erreicht (von oben; eine HSI macht keinen Sinn, da die Stop - Order allein den selben Effekt hätte) und anschließend das Stop - Limit erreicht wird. (Diese Weisungen machen scheinbar wenig Sinn, sind später jedoch Teil der wichtigsten Anwendung der Step - in Order.)*

### b) Verkauf 3 XY - Metall - Future - Kontrakte on stop 24,23, Step - in 24,95 Umkehrung von 2a) (Stop - Verkauf).

### 3) Step- in limit order

Wenn ein Marktteilnehmer die Kombination Step ― in limit wählt, bedeutet das grundsätzlich, daß beim Erreichen des Step - in Levels eine limitierte Order in das Orderbuch gestellt wird.

Je nachdem, wie sich Step - in Level, Limitkurs und aktueller Marktpreis zueinander verhalten es gibt mindestens 16 verschiedene Möglichkeiten, so daß nicht für jeden Fall unten ein Beispiel aufgeführt wird, ergeben sich Unterschiede hinsichtlich der Wahrscheinlichkeit der Ausführung bei Erreichen des Step - in Levels von wahrscheinlich sofort bis wahrscheinlich nicht und in der Intention, die mit der Erteilung der Order wahrscheinlich verknüpft waren. Die Kombination Step - in limit hat die gleichen Auswirkungen, wie eine Stop - limit order, allerdings mit dem Unterschied, daß stop - limit Orders in der Regel zur Verlustbegrenzung oder zum Einstieg beim Durchbrechen bestimmter Widerstands-Marken verwandt werden, wobei die Limitierung lediglich verhindern soll, daß eine Ausführung zu einem zu ungünstigen Preis erfolgt evtl. w/ kurzfristiger Illiquidität. Deshalb wird normalerweise beim stop - limit Verkauf die Limitierung knapp unter dem Stop - Kurs gewählt, beim Kauf knapp darüber. Das Verhältnis von Step - in Level und Limitierung können frei gewählt werden wie theoretisch bei der Stop - limit Order auch, jedoch wären einige Kombinationen für Stop - orders relativ ungewöhnlich.

### Beispiele:

### a) Kauf AB ― Aktie limit 25,30, HSI 25,00

*Diese Order hat den selben Effekt, wie eine stop limit order*. *Beim Erreichen des step* ― *in levels, wird die Order limitiert in das Orderbuch eingestellt.*

### b) Kauf CD ― Aktie limit 55,00, LSI 50,00

*Wenn die Aktie das LSI - Limit erreicht, wird die Order in das Orderbuch gestellt.*

*Zu a + b) Ob das Step - in Level über oder unter dem Aktienkurs gewählt wird, macht lediglich hinsichtlich der Wahrscheinlichkeit einer Ausführung einen Unterschied.*

### c) Verkauf EF ― Aktie limit 12,67, LSI 11,00

*Auch hier wird, wenn die Aktie das LSI - Limit erreicht, die Order in das Orderbuch gestellt.*

*Diese Order* wäre *für eine Stop - Limit Order eher ungewöhnlich, da beim Erreichen des Step - in Levels (bzw*. *des Stop - Limits) eine schnelle Ausführung unwahrscheinlich erscheint.*

### 4) Step ― in stop limit order

Die Weisung Step - in stop bedeutet, daß eine Stop - limit order in das Orderbuch gelangt, sobald das Step - in Level erreicht wird. Wird im Anschluß daran das Stop - Limit erreicht, gelangt eine limitierte Kauf - oder Verkaufsorder in das Orderbuch.

Ähnlich wie die step - in stop order erscheint diese Weisung alleine nicht sehr sinnvoll, entwickelt jedoch ebenfalls ihr Potential bei komplexen Handelsstrategien.

Auch bei dieser Orderform sind viel verschiedene Konstellationen bzgl. Step - in Level, Stop - Limit, Limitierung und aktuellem Marktpreis denkbar, so daß nicht alle denkbaren Konstellationen Eingang in die Beispielliste unten finden.

### Beispiele:

### a) Kauf XYZ Nahrungsmittel - Future on stop 88,50, limit 88,75, LSI 88,25

*Wir das Step - in Level von oben aus erreicht, wird automatisch die stop-limit order in das Handelssystem gestellt. Erreicht der Markt anschließend das Stop - Limit, wird die Kauforder sofort in das Orderbuch gestellt, wo sie dann zur Ausführung kommt, wenn* / sobald *ein Briefkurs auf / unter der Limitierung liegt.*

### b) Verkauf 5 Kontrakte ABC ― Future - Optionen on stop 2,30, limit 2,15, HSI 3,10

*Sobald das Step - in Level von unten aus erreicht wird, wird die stop* ― *limit order in das Handelssystem eingestellt. Erreicht der Markt anschließend das Stop -Limit, wird die Verkaufsorder in das Orderbuch gestellt. Eine vollständige Ausführung erfolgt dann, wenn ein Geldkurs (mit der entsprechenden Menge) über / auf der Limitierung notiert.*

### 5) Komplexe Orderstrategien

Die komplexen Orderstrategien sind die Grundlage auf der die Verwendung einer Step - in Order ihren eigentlichen Sinn entwickelt. Erscheinen die unter 1) bis 4) beschriebenen grundsätzlichen Orderweisungen zum Teil eher sinnlos, ist es durch die Kombinationen mit der Step - in Order möglich komplexe Handelsstrategien direkt durch die Eingabe einer Order in das Handelssystem umzusetzen. Dies soll ein Beispiel verdeutlichen

Ein Marktteilnehmer geht eine long - Position (1 Kontrakt) im ABC-Zinsfuture zu 101,37 ein (Opening).

Er rechnet mit fallenden Zinssätzen und geht deshalb von einem Anstieg in diesem Future aus. Gleichzeitig möchte er jedoch seine Verluste rechtzeitig nach unten begrenzen, falls sich seine Meinung als falsch erweisen sollte. Dies erreicht er, indem er ein Stop bei 101,17 (Verkauf on stop) legt. Außerdem möchte dieser Marktteilnehmer seinen Stop nach oben nachziehen, falls seine Meinung sich als richtig erweisen sollte, um einen Teil der Buchgewinne, die sich durch einen Anstieg des Futures ergäben bei einer Umkehrung des Trends (also: wieder fallenden Kursen) zu retten (sog.

Trailing - Verfahren). Diesen Vorgang des Stop ― Nachziehens wird er / muß er bei einem weiteren Anstieg des Futures ein oder mehrmals wiederholen, bis er entweder ein Stop - Limit erreicht wird (und es zur Ausführung kommt) oder er den Stop löscht und die Position schließt (Closing).

Dieses Prozedere kann mit Hilfe der Step - in Order durch einmalige Eingabe erledigt werden. Eine solche Order könnte zum Beispiel folgendermaßen aussehen:
Verkauf 1 Kontrakt ABC - Zinsfuture on stop 101,17 OCO
Step - in 101,57 Verkauf 1 Kontrakt ABC - Zinsfuture on stop 101,38 OCO
Step - in 101,97 Verkauf 1 Kontrakt ABC - Zinsfuture on stop 101,67 OCO
Step - in 102,51 Verkauf 1 Kontrakt ABC - Zinsfuture on stop 102,10 OCO
Verkauf 1 Kontrakt ABC - Zinsfuture limit 102,91 OCO
Verkauf 1 Kontrakt ABC - Zinsfuture MOC

Diese Order erfüllt den selben Zweck, wie das Prozedere, daß unser Marktteilnehmer vollziehen mußte. Neben dem reinen Trailing wurde die Order optimal noch um zwei Elemente ergänzt. Zum einen wird ein Take-Profit Limit festgelegt (102,91), also ein Kurs zu dem auf jeden Fall gewinne mitgenommen werden, zum anderen erfolgt ein Closing der Position kurz vor Schließung des Handels zum dann aktuellem Marktpreis (MOC = market on Closing). Anstatt einer Step - in stop order hätte man selbstverständlich auch eine Step - in stop limit order verwenden können, dies wäre evtl. in illiquiederen Märkten zu empfehlen.

Für die Optimierung der Anwendung des Step - in Zusatzes wird weiterhin vorgeschlagen

### Ergänzungen:

### A) Neuinterpretation OCO

Der Zusatz OCO (one cancells other) sollte im Bezug auf eine mit dem Zusatz "Step ― in" versehene Order so interpretiert werden, daß das Einstellen einer Order aufgrund des Erreichens eines Step - in Levels zur automatischen und gleichzeitigen Löschung der zuvor im Orderbuch befindlichen Order führt (Löschung Grenzwert 1).

D.h., daß bei der Order Kauf Z - Aktie on stop 1500 OCO step - in 1400 Kauf Z - Aktie on stop 1450
beim Erreichen des step - in levels der im Orderbuch befindliche Teil ("Kauf Z - Aktie on stop 1500") gelöscht werden muß, währenddessen gleichzeitig der Orderteil "Kauf z - Aktie on stop 1450" in das Orderbuch eingestellt wird.

Diese Neuinterpretation des Zusatzes OCO ist zwar nicht zwingend erforderlich, um die Step -in order anwenden zu können, dennoch erleichtert diese Neuinterpretation den Umgang mit dieser Weisung, da s z. B. in Extremfällen zu Doppelausführungen kommen könnte.

### B) Eingabesperre in der "Nähe" des aktuellen Marktwertes

Wie bereits mehrfach ausgeführt, ist die Unterscheidung in LSI und HSI nicht erforderlich, da bei der Eingabe der Order das vom Marktteilnehmer gewünschte Step - in Level sowie der aktuelle Marktpreis bekannt sind. Es ist also mit der Eingabe der Step - in Levels automatisch klar, ob es sich um eine LSI - Order oder eine HSI - Order handeln soll.

Damit jedoch Fehlinterpretationen der Order durch Marktschwankungen während der Ordereingabe / - weitergabe vermieden werden, kann (vor allem bei vollatillen Märkten) eine Eingabesperre um den aktuellen Marktpreis herum eingeführt werden (z.B. aktueller Marktpreis +/- 2 %).

Alternativ kann auch die Eingabe von LSI und HSI (also die Aufsplittung der step - in order in zwei Weisungsarten) vorgenommen werden.

Der Orderzusatz "Step ― in" Ermöglicht es jedem Marktteilnehmer eine komplexe und professionelle Handelsstrategie umzusetzen, auch dann, wenn es ihm nicht möglich ist, während der ganzen Handelszeit den Markt zu beobachten.

Die Umsetzung einer solchen Handelsstrategie kann durch die Eingabe einer einzigen Order umgesetzt werden.

Außerdem ist es auch einen Marktteilnehmer, der laufend die Märkte beobachten kann, möglich, seine Handelsidee einmal zu Beginn einzugeben, so daß Verunsicherung, die durch die Bewegung des Marktes entstehen kann, nicht zu Inaktivität des Marktteilnehmer führt. Dies bedeutet, daß eine Umkehrung der Handlungserfordernisse möglich wird: der Marktteilnehmer muß nicht mehr handeln, wenn seine Handelsstrategie weiter verfolgt werden soll, sondern nur, wenn er aus ihr ausbrechen will (im Gegensatz z.B. zum "Trailing per Hand").

Ebenfalls kann - vor allem im professionellen Handel - die Gefahr umgangen werden, daß eine Maßnahme zur Umsetzung einer Handelsstrategie nicht (rechtzeitig) vorgenommen werden konnte, da zu diesem Zeitpunkt die Aufmerksamkeit des Marktteilnehmers auf einen anderen Markt gerichtet war.

Letzten Endes ist auch die Umkehrung der Step ― in order denkbar: Die Weisung "Step ― out" führt dazu, daß eine Order aus dem Orderbuch gestrichen wird, sobald das Step - out Level erreicht wird. Diese Weisung ist theoretisch mit jeder Art von Order, mit Ausnahme einer market order, denkbar.

### Beispiel:

### a) Verkauf EFG Devisen - Option on stop 6,30, limit 6,10, step - out 9,20

*Sollte der Marktpreis für die Option 9,20 erreichen, bevor die Order ausgeführt wurde, wird sie gestrichen.*

Die Erfindung zur Nachführung von Grenzwerten wurde ohne Beschränkung anhand eines Beispielbereiches (Börse) erläutert.

## Patentansprüche

1. Verfahren zur automatisierten Nachführung wenigstens eines Grenzwertes für die Durchführung von grenzwertbezogenen Folgemaßnahmen bei einer entsprechenden Veränderung wenigstens eines überwachten und mit dem Grenzwert verglichenen Führungsparameters, wobei
a) ein erster Grenzwert festgelegt,
b) wenigstens ein zweiter Grenzwert festgelegt und diesem ein Ersatzwert zugeordnet wird,
c) der Führungsparameter überwacht und mit dem ersten und zweiten Grenzwert verglichen wird,
d) festgelegte Folgemaßnahmen eingeleitet werden, wenn der überwachte Führungsparameter den ersten Grenzwert erreicht oder
e) der erste festgelegte Grenzwert eliminiert und durch den Ersatzwert ein neuer erster Grenzwert festgelegt wird, wenn der Führungsparameter mit dem zweiten Grenzwert übereinstimmt.

2. Verfahren nach Anspruch 1, dadurch gekennzeichnet, daß eine Folge von zweiten Grenzwerten und jedem einzelnen zugeordnete Ersatzwerte festgelegt werden.

3. Verfahren nach einem der vorhergehenden Ansprüche, dadurch gekennzeichnet, daß die Grenzwerte und Ersatzwerte gespeichert werden.

4. Verfahren nach einem der vorhergehenden Ansprüche, dadurch gekennzeichnet, daß die Überwachung des Führungsparameters und der Grenzwertvergleich softwaregesteuert durchgeführt werden.

5. Verfahren nach einem der vorhergehenden Ansprüche, dadurch gekennzeichnet, daß dieses DV-Anlagen gestützt durchgeführt wird.

6. Verfahren nach einem der Ansprüche 4 oder 5, dadurch gekennzeichnet, daß der den Führungsparameter repräsentierende Wert über Datenfernübertragung eingespeist wird.

7. Verfahren nach wenigstens einem der vorhergehenden Ansprüche, dadurch gekennzeichnet, daß dieses auf eine obere und/oder untere Grenze angewandt wird.

8. Verfahren nach einem der vorhergehenden Ansprüche, dadurch gekennzeichnet, daß der erste festgelegte Grenzwert eine Untergrenze darstellt und der zweite festgelegte Grenzwert eine Obergrenze.

9. Verfahren nach einem der vorhergehenden Ansprüche, dadurch gekennzeichnet, daß der erste festgelegte Grenzwert eine Obergrenze darstellt und der zweite festgelegte Grenzwert eine Untergrenze.

10. Verfahren nach einem der vorhergehenden Ansprüche, dadurch gekennzeichnet, daß wenigstens zwei Grenzwert-/Ersatzwertpaarungen veränderbar sind.

11. Verfahren nach einem der vorhergehenden Ansprüche, dadurch gekennzeichnet, daß diese innerhalb eines vorgegebenen Zeitintervalls durchgeführt wird.
